# EUROPEAN PATENT APPLICATION

(11) **EP 2 733 559 A2**
(43) Date of publication of application: **21.05.2014**
(21) Application number: 13192565.3
(22) Date of filing: 12.11.2013
(51) Int. Cl.: G05B 23/02

(54) **Methods and systems to improve power plant performance by corrective set points**

(30) Priority: 20.11.2012 US 201213681796
(71) Applicant: General Electric Company, Schenectady, New York 12345 (US)
(72) Inventor: Tiwari, Awadesh Kumar, 560066 Bangalore (IN); Smith, Gordon Raymond, Schenectady, New York 12345 (US); Seely, William Forrester, Greenville, South Carolina 29615 (US)
(74) Representative: Picker, Madeline Margaret

(57) **Abstract**

A method (700) of operating a process facility (10) and a power plant operating system (20) are provided. The power plant operating system includes a control system (400) used by a plurality of operators and a computer device (27) coupled to the control system. The computer device includes a processor (24) and a memory (25) coupled to the processor. The memory includes processor-executable instructions that, when executed by the processor (24), cause the computer device to collect data pertaining to the operation of the power plant by each of the plurality of operators, determine an operating efficiency of each of the plurality of operators in operating the power plant, and transmit one or more advisory messages (428) to at least one of the plurality of operators recommending a manual intervention by the operator to operate the power plant based on the collected data and the determination of the efficiency of each of the operators.

## Description

The field of the disclosure relates generally to operating a process plant, such as a power plant, and more particularly to managing the operation of the process plant using historical information about the operation of the process plant.

A power plant generally operates by receiving resources and converting the resources into electricity. The operation of the power plant involves multiple components which function in accordance with instructions from a control system. A human operator monitors the operation of the power plant using information collected from a plurality of sensors coupled to the components of the plant and issues instructions to the components through the control system. Generally, the instructions are in the form of set points, which are target settings for the components of the power plant. The set points may include, for example, temperatures, drum levels, fluid flows, and pressures.

Depending on the set points chosen by an operator of the control system, the power plant may operate more efficiently or less efficiently. That is, for a given amount of resources, the amount of electricity generated by the power plant may vary depending on the set points used in the operation of the power plant.

In one embodiment, a power plant operating system includes a control system and a plurality of components controlled by the control system. The control system is used by a plurality of operators and the operating system includes a computer device coupled to the control system wherein the computer device includes a processor and a memory coupled to the processor. The memory includes processor-executable instructions that, when executed by the processor, cause the computer device to perform the steps of collecting data pertaining to the operation of the power plant by each of the plurality of operators, determining an operating efficiency of each of the plurality of operators in operating the power plant, and transmitting one or more advisory messages to at least one of the plurality of operators recommending a manual intervention by the operator to operate the power plant based on the collected data and the determination of the efficiency of each of the operators.

In another embodiment, a computer-implemented method for operating a process facility includes collecting data pertaining to operation of the power plant by each of the plurality of operators, determining an efficiency of each of the plurality of operators in operating the power plant, and transmitting one or more advisory messages to at least one of the plurality of operators recommending a manual intervention by the operator to operate the power plant based on the collected data and the determination of the efficiency of each of the operators. The process facility includes a control system and a plurality of components controlled by the control system and is used by plurality of operators. The method is performed by a computer device coupled to the control system and includes a processor and a memory coupled to the processor.

In yet another embodiment, a computer-readable storage device includes processor-executable instructions stored thereon and when executed by at least one processor in a computer device coupled to a control system of a power plant, the processor-executable instructions cause the processor to perform the steps of collecting data pertaining to operation of the power plant by each of a plurality of operators, determining an efficiency of each of the plurality of operators in operating the power plant, and transmitting one or more advisory messages to at least one of the plurality of operators recommending a manual intervention by the operator to operate the power plant based on the collected data and the determination of the efficiency of each of the operators.
FIGS. 1-7 show exemplary embodiments of the method and system described herein.
FIG. 1 is a block diagram an exemplary equipment layout of an industrial plant in accordance with an exemplary embodiment of the present disclosure.
Fig. 2 is a block diagram of an exemplary embodiment of a network architecture of a plant control system implementing the CIMMS shown in Figure 1.
FIG. 3 is a schematic block diagram of an operator analytics framework in accordance with an exemplary embodiment of the present disclosure.
FIG. 4 is a schematic block diagram of an operator analytics control system that may be used with the industrial plant.
FIG. 5 is a schematic block diagram of data flow for calculations for generating set-point corrections in accordance with an exemplary embodiment of the present disclosure.
FIG. 6 is a schematic block diagram of a data flow of set-point generation in a controls adaptability framework.
Fig 7 is a flow chart of a method of operating a process plant, such as a thermal power plant, in accordance with an exemplary embodiment of the present disclosure.

The following detailed description illustrates embodiments of the disclosure by way of example and not by way of limitation. It is contemplated that the disclosure has general application to analytical and methodical embodiments of operating process systems in industrial, commercial, and residential applications.

As used herein, an element or step recited in the singular and preceded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

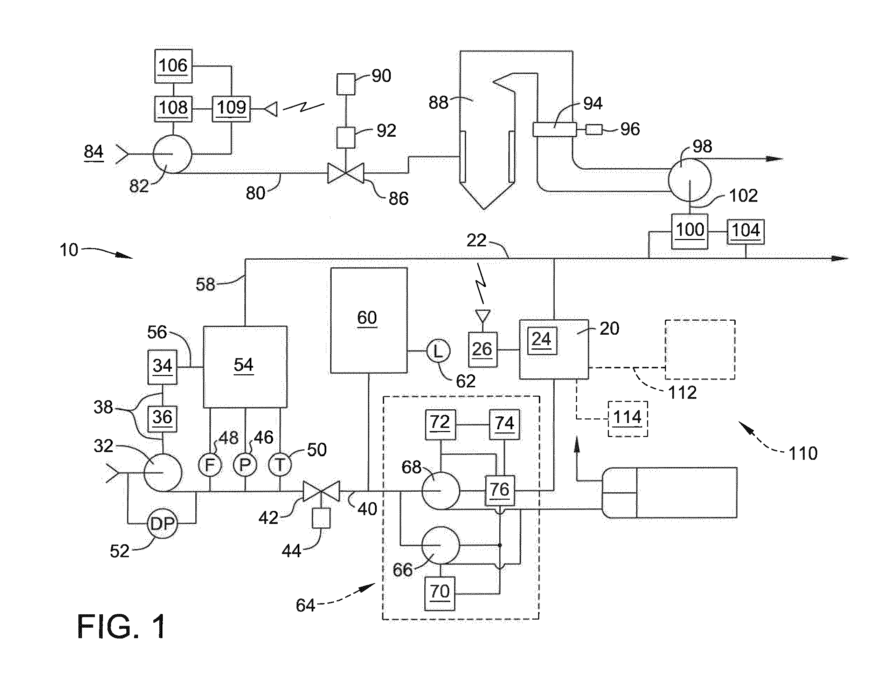

FIG. 1 is a block diagram an exemplary equipment layout of an industrial plant 10 in accordance with an exemplary embodiment of the present disclosure. Industrial plant 10 may include a plurality of pumps, motors, fans, and process monitoring sensors that are coupled in flow communication through interconnecting piping and communicatively coupled to a control system through one or more remote input/output (I/O) modules and interconnecting cabling and/or wireless communication. In the exemplary embodiment, industrial plant 10 includes a distributed control system (DCS) 20 including a network backbone 22. Network backbone 22 may be a hardwired data communication path fabricated from twisted pair cable, shielded coaxial cable or fiber optic cable, for example, or may be at least partially wireless. DCS 20 may also include a processor 24 and a memory 25 as part of a computing device 27 that is communicatively coupled to equipment that is located at industrial plant 10, or at remote locations, through network backbone 22. It is to be understood that any number of machines may be communicatively connected to the network backbone 22. A portion of the machines may be hardwired to network backbone 22, and another portion of the machines may be wirelessly coupled to backbone 22 via a base station 26 that is communicatively coupled to DCS 20. Wireless base station 26 may be used to expand the effective communication range of DCS 20, such as with equipment or sensors located remotely from industrial plant 10 but, still interconnected to one or more systems within industrial plant 10.

DCS 20 may be configured to receive and display operational parameters associated with a plurality of equipment, and to generate automatic control signals and receive manual control inputs for controlling the operation of the equipment of industrial plant 10. In the exemplary embodiment, DCS 20 may include a software code segment configured to control processor 24 to analyze data received at DCS 20 that allows for on-line monitoring and diagnosis of the industrial plant machines. Process parameter data may be collected from each machine, including pumps and motors, associated process sensors, and local environmental sensors, including for example, vibration, seismic, ambient temperature and ambient humidity sensors. The data may be pre-processed by a local diagnostic module or a remote input/output module, or may be transmitted to DCS 20 in raw form.

Specifically, industrial plant 10 may include a first process system 30 that includes a pump 32 coupled to a motor 34 through a coupling 36, for example a hydraulic coupling, and interconnecting shafts 38. The combination of pump 32, motor 34, and coupling 36, although comprising separate components, may operate as a single system, such that conditions affecting the operation of one component of the combination may effect each of the other components of the combination. Accordingly, condition monitoring data collected from one component of the combination that indicates a failure of a portion of the component or an impending failure of the component may be sensed at the other components of the combination to confirm the failure of the component and/or facilitate determining a source or root cause of the failure.

Pump 32 may be connected to a piping system 40 through one or more valves 42. Valve 42 may include an actuator 44, for example, but, not limited to, an air operator, a motor operator, and a solenoid. Actuator 44 may be communicatively coupled to DCS 20 for remote actuation and position indication. In the exemplary embodiment, piping system 40 may include process parameter sensors, such as a pressure sensor 46, a flow sensor 48, a temperature sensor 50, and a differential pressure (DP) sensor 52. In an alternative embodiment, piping system 40 may include other sensors, such as turbidity, salinity, pH, specific gravity, and other sensors associated with a particular fluid being carried by piping system 40. Sensors 46, 48, 50 and 52 may be communicatively coupled to a field module 54, for example, a preprocessing module, or remote I/O rack.

Motor 34 may include one or more of a plurality of sensors (not shown) that are available to monitor the operating condition of electrodynamic machines. Such sensors may be communicatively coupled to field module 54 through an interconnecting conduit 56, for example, copper wire or cable, fiber cable, and wireless technology.

Field module 54 may communicate with DCS 20 through a network segment 58. The communications may be through any network protocol and may be representative of preprocessed data and or raw data. The data may be transmitted to processor 24 continuously in a real-time environment or to processor 24 intermittently based on an automatic arrangement or a request for data from processor 24. DCS 20 includes a real time clock in communication with network backbone 22, for time stamping process variables for time-based comparisons.

Piping system 40 may include other process components, such as a tank 60 that may include one or more of a plurality of sensors available for monitoring process parameters associated with tanks, such as, a tank level sensor 62. Tank 60 may provide a surge volume for fluid pumped by pump 32 and/or may provide suction pressure for downstream components, such as, skid 64. Skid 64 may be a pre-engineered and prepackaged subsystem of components that may be supplied by an OEM. Skid 64 may include a first pump 66 and a second pump 68. In the exemplary embodiment, first pump is coupled to a motor that is directly coupled to a power source (not shown) through a circuit breaker (not shown) that may be controlled by DCS 20. Second pump 68 is coupled to a motor 72 that is coupled to the power source through a variable speed drive (VSD) 74 that controls a rotational speed of motor 72 in response to commands from a skid controller 76. Each of pumps 66 and 68, and motors 70 and 72, and VSD 74 may include one or more sensors associated with respective operating parameters of each type of equipment as described above in relation to pump/motor/coupling 32, 34, and 36 combination. Skid controller 76 receives signals from the sensors and may transmit the signals to DCS 20 without preprocessing or after processing the data in accordance with predetermined algorithms residing within skid controller 76. Skid controller 76 may also process the signals and generate control signals for one or more of pumps 66 and 68, and motors 70 and 72, and VSD 74 without transmitting data to DCS 20. Skid controller may also receive commands from DCS 20 to modify the operation of skid 64 in accordance therewith.

A second piping system 80 may include a fan 82 that receives air from an ambient space 84 and directs the air through a valve or damper 86 to a component, such as a furnace 88. Damper 86 may include position sensors 90 and 92 to detect an open and closed position of damper 86. Furnace 88 may include a damper 94 that may be operated by actuator 96, which may be, for example, a motor actuator, a fluid powered piston actuator, or other actuator, which may be controlled remotely by DCS 20 through a signal transmitted through a conduit (not shown). A second fan 98 may take a suction on furnace 88 to remove combustion gases from furnace 88 and direct the combustion gases to a smoke stack or chimney (not shown) for discharge to ambient space 84. Fan 98 may be driven by a motor 100 through a shaft 102 coupled between fan 98 and motor 100. A rotational speed of motor 100 may be controlled by a VSD 104 that may be communicatively coupled to DCS 20 though network backbone 22. Fan 82 may be driven by an engine 106, such as an internal combustion engine, or a steam, water, wind, or gas turbine, or other driver, through a coupling 108, which may be hydraulic or other power conversion device. Each of the components may include various sensors and control mechanisms that may be communicatively coupled to DCS 20 through network backbone 22 or may communicate with DCS 20 through a wireless transmitter/receiver 109 to wireless base station 26.

DCS 20 may operate independently to control industrial plant 10, or may be communicatively coupled to one or more other control systems 110. Each control system may communicate with each other and DCS 20 through a network segment 112, or may communicate through a network topology, for example, a star (not shown).

In the exemplary embodiment, plant 10 includes a continuous integrated machinery monitoring system (CIMMS) 114 that communicates with DCS 20 and other control systems 110. CIMMS 114 may also be embodied in a software program segment executing on DCS 20 and/or one or more of the other control systems 110. Accordingly, CIMMS 114 may operate in a distributed manner, such that a portion of the software program segment executes on several processors concurrently. As such, CIMMS 114 may be fully integrated into the operation of DCS 20 and other control systems 110. CIMMS 114 analyzes data received by DCS 20 and the other control systems 110 determine a health the machines and/or a process employing the machines using a global view of the industrial plant 10. CIMMS 114 analyzes combinations of drivers and driven components, and process parameters associated with each combination to correlate machine health findings of one machine to machine health indications from other machines in the combination, and associated process or environmental data. CIMMS 114 uses direct measurements from various sensors available on each machine and derived quantities from all or a portion of all the sensors in industrial plant 10. CIMMS 114, using predetermined analysis rules, determines a failure or impending failure of one machine and automatically, in real-time correlates the data used to determine the failure or impending failure with equivalent data derived from the operating parameters of other components in the combination or from process parameters. CIMMS 114 also provides for performing trend analysis on the machine combinations and displaying data and/or trends in a variety of formats so as to afford a user of CIMMS 114 an ability to quickly interpret the health assessment and trend information provided by CIMMS 114.

Although various combinations of machines are generally illustrated as motor/pump, motor/fan, or engine/fan combinations, it should be understood these combinations are exemplary only, and CIMMS 114 is configured to analyze any combination of driver/driven machines.

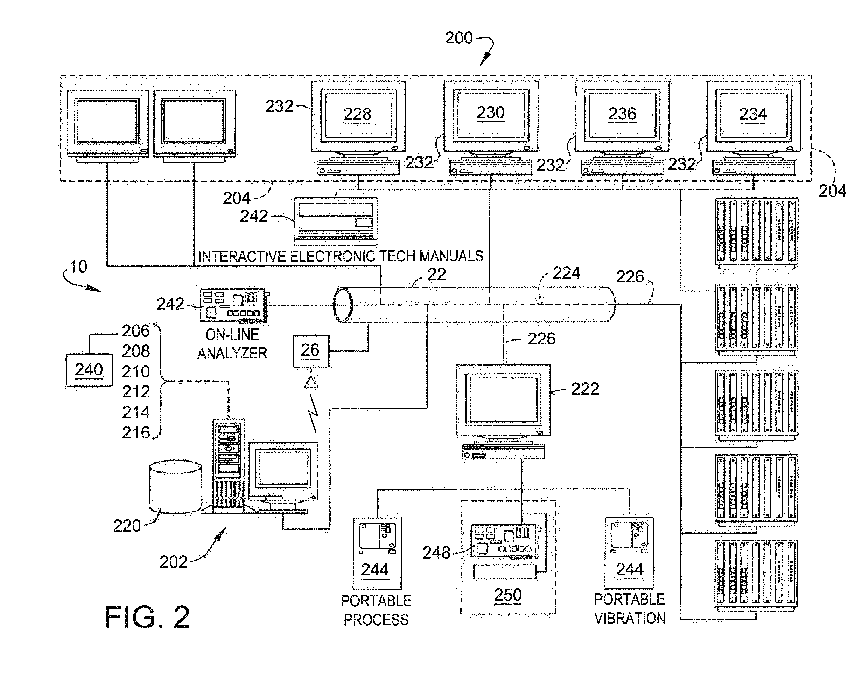

Fig. 2 is a block diagram of an exemplary embodiment of a network architecture of a plant control system 200 implementing CIMMS 114 (shown in Figure 1). Components in system 200, identical to components of plant 10 (shown in Figure 1), are identified in Figure 2 using the same reference numerals as used in Figure 1. In the exemplary embodiment, system 200 includes a server system 202 and client systems 204. Server system 202 further includes a database server 206, an application server 208, a web server 210 a fax server 212, a directory server 214, and a mail server 216. Each of servers 206, 208, 210, 212, 214, and 216 may be embodied in software executing on server system 202, or any combinations of servers 206, 208, 210, 212, 214, and 216 may be embodied alone or in combination on separate server systems coupled in a local area network (LAN) (not shown). A disk storage unit 220 is coupled to server system 202. In addition, a workstation 222, such as a system administrator's workstation, a user workstation, and/or a supervisor's workstation are coupled to a LAN 224. Alternatively, workstations 222 are coupled to LAN 224 using an Internet link 226 or are connected through an Intranet.

Each workstation 222 may be a personal computer having a web browser. Although the functions performed at the workstations typically are illustrated as being performed at respective workstations 222, such functions can be performed at one of many personal computers coupled to LAN 224. Workstations 222 are described as being associated with separate exemplary functions only to facilitate an understanding of the different types of functions that can be performed by individuals having access to LAN 224.

Server system 202 is configured to be communicatively coupled to various individuals, including employees 228 and to third parties, e.g., service providers 230. The communication in the exemplary embodiment is illustrated as being performed using the Internet, however, any other wide area network (WAN) type communication can be utilized in other embodiments, i.e., the systems and processes are not limited to being practiced using the Internet.

In the exemplary embodiment, any authorized individual having a workstation 232 can access CIMMS 114. At least one of the client systems may include a manager workstation 234 located at a remote location. Workstations 222 may be embodied on personal computers having a web browser. Also, workstations 222 are configured to communicate with server system 202. Furthermore, fax server 212 communicates with remotely located client systems, including a client system 236 using a telephone link (not shown). Fax server 212 is configured to communicate with other client systems 228, 230, and 234, as well.

Computerized modeling and analysis tools of CIMMS 114, as described below in more detail, are stored in server 202 and can be accessed by a requester at any one of client systems 204. In one embodiment, client systems 204 are computers including a web browser, such that server system 202 is accessible to client systems 204 using the Internet. Client systems 204 are interconnected to the Internet through many interfaces including a network, such as a local area network (LAN) or a wide area network (WAN), dial-in-connections, cable modems and special high-speed ISDN lines. Client systems 204 could be any device capable of interconnecting to the Internet including a web-based phone, personal digital assistant (PDA), or other web-based connectable equipment. Database server 206 is connected to a database 240 containing information about industrial plant 10, as described below in greater detail. In one embodiment, centralized database 240 is stored on server system 202 and can be accessed by potential users at one of client systems 204 by logging onto server system 202 through one of client systems 204. In an alternative embodiment, database 240 is stored remotely from server system 202 and may be non-centralized.

Other industrial plant systems may provide data that is accessible to server system 202 and/or client systems 204 through independent connections to LAN 224. An interactive electronic tech manual server 242 services requests for machine data relating to a configuration of each machine. Such data may include operational capabilities, such as pump curves, motor horsepower rating, insulation class, and frame size, design parameters, such as dimensions, number of rotor bars or impeller blades, and machinery maintenance history, such as field alterations to the machine, as-found and as-left alignment measurements, and repairs implemented on the machine that do not return the machine to its original design condition. Additionally, server system 202 may send predetermined and/or selectable set-points to DCS 20. Such set-point may be determined based on a predetermined limitation on an equipment combination to limit its capability based on a machinery history, as-found, and/or as left inspection results. Other rule determinations may also transmitted to DCS 20.

A portable vibration monitor 244 may be intermittently coupled to LAN directly or through a computer input port such as ports included in workstations 222 or client systems 204. Typically, vibration data is collected in a route, collecting data from a predetermined list of machines on a periodic basis, for example, monthly or other periodicity. Vibration data may also be collected in conjunction with troubleshooting, maintenance, and commissioning activities. Such data may provide a new baseline for algorithms of CIMMS 114. Process data may similarly, be collected on a route basis or during troubleshooting, maintenance, and commissioning activities. Certain process parameters may not be permanently instrumented and a portable process data collector 244 may be used to collect process parameter data that can be downloaded to plant control system 200 so that it is accessible to CIMMS 114. Other process parameter data, such as process fluid chemistry analyzers and pollution emission analyzers may be provided to plant control system 200 through a plurality of on-line monitors 246.

Electrical power supplied to various machines or generated by generators within industrial plant 10 may be monitored by a relay 246, for example, but, not limited to a protection relay, associated with each machine. Typically, such relays 246 are located remotely from the monitored equipment in a motor control center (MCC) or in switchgear 250 supplying the machine. In addition, to relay 246, switchgear 250 may also include a supervisory control and data acquisition system (SCADA) that provides CIMMS 114 with a condition of power supply or power delivery system (not shown) equipment located at the industrial plant 10, for example, in a switchyard, or remote transmission line breakers and line parameters.

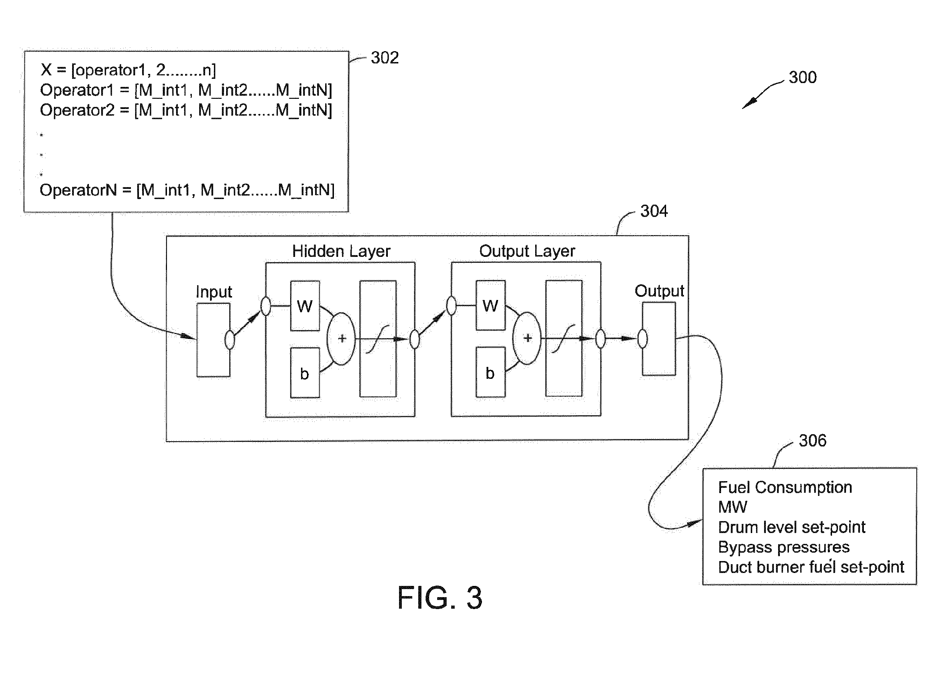

FIG. 3 is a schematic block diagram of an operator analytics framework 300 in accordance with an exemplary embodiment of the present disclosure. In the exemplary embodiment, framework 300 is used to analyze various sources 302 of operating data from equipment or facility fleets and extract different operator features, such as, for example, a style of the operators' operational responses for similar situational demands, how many manual actions are taken to meet demand or how many manual interventions are used by each operator to meet grid demand (M_int), an effect of each operators' operating style on the plant performance, operator versus Heat rate (X_HR), operator versus Fuel Consumption (X_FC), and operator versus emissions (X_Emm), and revenue generated due to their operating skills (X_p) and (X_n). In one embodiment, framework 300 uses a data processor 304 that includes a fuzzy processor. In various embodiments, framework 300 uses a neural network. Data processor 304 receives inputs related to how a plurality of operators operates a plant using measurements of the operators' interventions during various operational scenarios of the plant. In various embodiments, data processor 304 analyzes more than one input related to an operators' style or an environmental uncertainty.

Framework 300 uses supervised and unsupervised learning about operator styles of operating plants of similar configurations while accounting for various environmental uncertainties. In various embodiments, outputs of data processor 304 include operational set-points 306 transmitted to a control system, such as DCS 20. Such outputs may include set-points for fuel consumption, output power, drum level, pressure, and duct burner fuel.

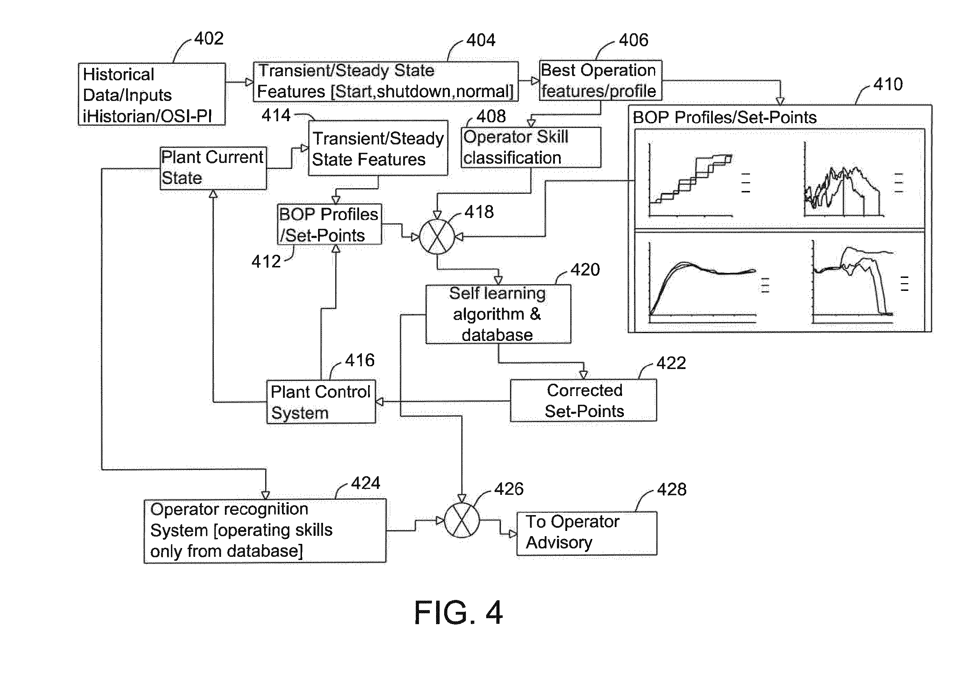

FIG. 4 is a schematic block diagram of an operator analytics control system 400 that may be used with plant 10. In the exemplary embodiment, control system 400 is a portion of DCS 20. In various embodiments, control system 400 may be a stand-alone control system communicatively coupled to DCS 20.

In the exemplary embodiment, historical data 402, known features 404 of plant 10 during various operational states, and determined best operational features or profiles are used to determine an operator skill classification 408 and are used to update a balance of plant (BOP) profiles/set-points database 410. As used herein, operation profiles relate to a process pathway plant 10 is subjected to from cold iron conditions through startup and steady state conditions to synchronization and full-power operation. Profiles, in some cases, differ due to power demands on the grid and/or environmental conditions. Existing BOP profiles/set-points 412 are determined using transient/steady state features 414 and settings in a plant control system 416, for example, DCS 20. Outputs from operator skill classification 408, BOP profiles/set-points database 410, and existing BOP profiles/set-points 412 are combined 418 and the resultant information are processed through a self-learning algorithm and database 420 to generate corrected set-points 422 that account for the current plant state in real-time, operator skill, and environmental uncertainty. Corrected set-points 422 are then applied to plant control system 416 in a closed-loop control scheme.

Outputs from self-learning algorithm and database 420 and an operator recognition system 424 are also combined 426 to generate an operator advisory 428. Operator recognition system 424 is generated using log registers at site and/or automatic log system provided in this method, that requires information such as name, age, shift, timing, grid demand, start-up time, base load or part load, time the plant operated, shutdown time, shift end time etc. From database these information are pulled in and compared against current state of the plant and thus if current plant state matches with database record, plant feature/state is assigned to recognized operator, if it is a new state of the plant, then this particular operator is pushed into database for future processing. Operator advisory provides provisions for automatic actions to be taken by controls system or override any suggestions generated by this system and continue manual mode of operation, send log report, generate malfunction alarm, etc. Operator advisory is a front end visualization screen that provides interface between various algorithm and visual display to the operator.

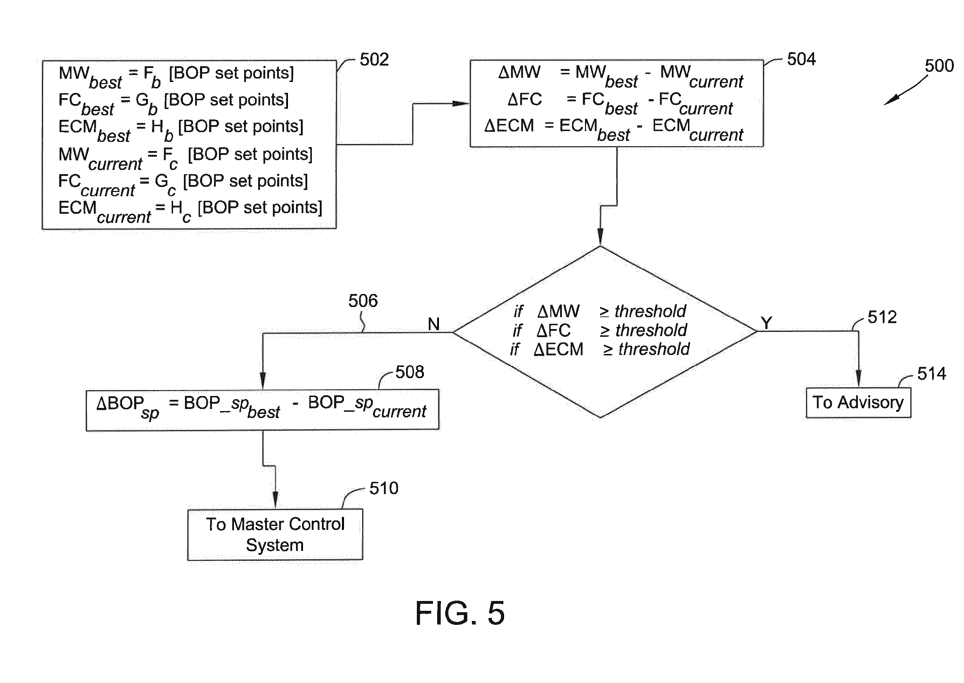

FIG. 5 is a schematic block diagram of data flow 500 for calculations for generating set-point corrections in accordance with an exemplary embodiment of the present disclosure. In the exemplary embodiment, current BOP set-points 412 for various plant parameters and set-points relating to the best operations 406 for those plant parameters during the current state of the plant as shown in BOP profiles/set-points database 410 are compared 504 and a differential is determined. If the differential is less than a predetermined threshold 506, a set-point differential is determined using a best operations set-point and the current set-point and the set-point differential is transmitted to the master control system 510. If the differential exceeds or is equal to the threshold 512, an advisory 514 is sent to the operator for the operator to consider making a manual intervention to bring the operation of the plant within the best practices operation, for example, by transmitting one or more advisory messages to at least one of the plurality of operators recommending a manual intervention by the operator to operate the power plant based on a set-point based on the skill and/or efficiency of a plurality of the operators.

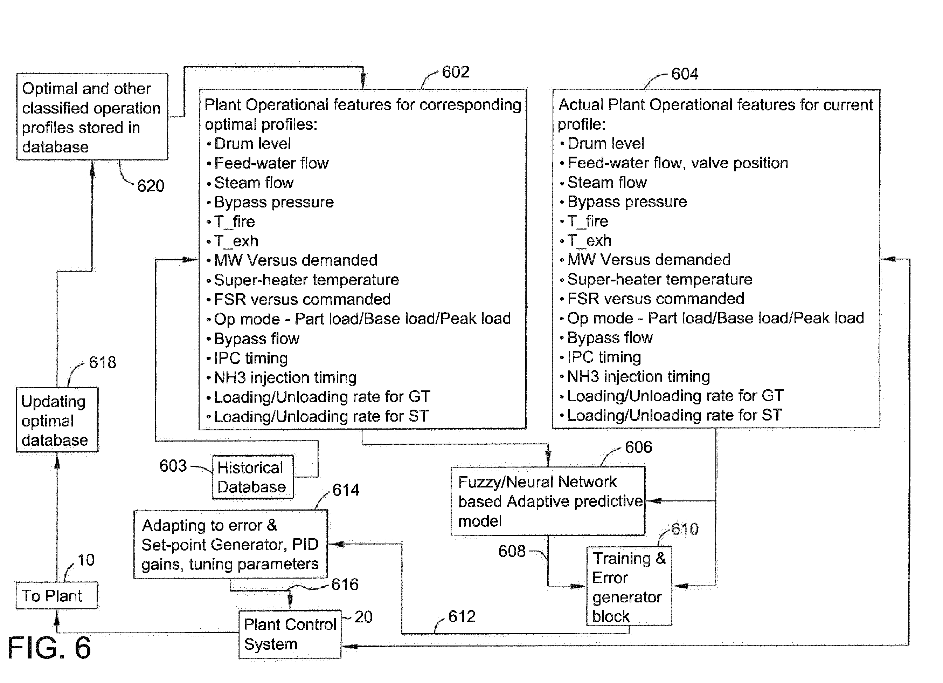

FIG. 6 is a schematic block diagram of a data flow of set-point generation in a controls adaptability framework 600. In the exemplary embodiment, framework 600 includes a database 602 of plant operational features, which are based on features stored in a historical database 603. The operational features correspond to optimal profiles, profiles that are determined to follow a determined optimal process pathway from cold iron to full load. Framework 600 also includes a database 604 of actual plant features for the current plant profile. Data stored in databases 602 and 604 are processed through an adaptive predictive model 606, which may be fuzzy logic or neural network based. An output 608 of adaptive predictive model 606 and actual plant features for the current plant profile from database 604 are processed by a training and error generator block 610 to generate set-points 612 that include learned adjustments that account for an operator's skill, environmental uncertainty, and variability in the plant operations. Set-points 612 are adapted 614 to include Proportional, Integral, Differential (PID) gains and tuning parameters. The adapted set-points 616 are then applied to plant control system 20 for controlling the operation of the plant equipment in an closed-loop control scheme that not only accounts for historical plant equipment, environmental variability, but also the experience and skill of various operators associated with each stage of operation according to associated profiles. A database 618 of optimal operating features is updated and then stored along with classified operation profiles in a database 620.

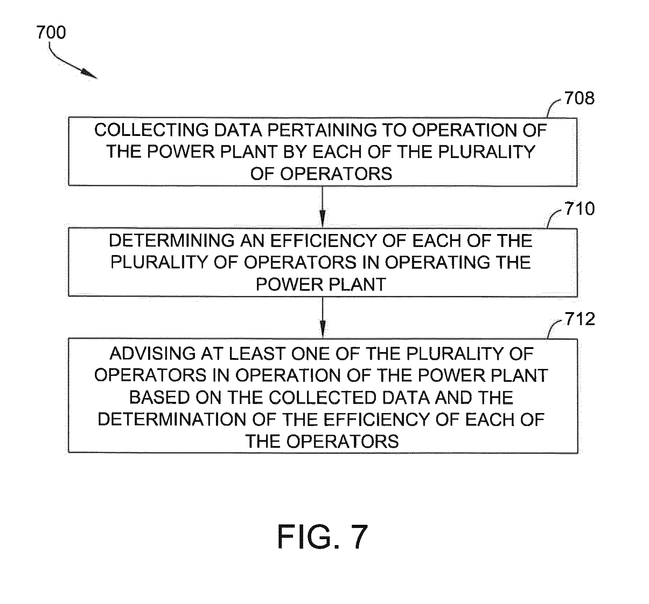

Fig 7 is a flow chart of a method 700 of operating a process plant, such as a thermal power plant, in accordance with an exemplary embodiment of the present disclosure. In the exemplary embodiment, a power plant operating system includes a control system and a plurality of components controlled by the control system, the control system being configured for use by a plurality of operators in operating the plant. The operating system includes a computer device coupled to the control system wherein the computer device includes a processor and a memory coupled to the processor. In various embodiments, the memory contains processor-executable instructions that, when executed by the processor, cause the computer device to collect 708 data pertaining to operation of the power plant by each of the plurality of operators, determine 710 an operating efficiency of each of the plurality of operators in operating the power plant, and transmit 712 one or more advisory messages to at least one of the plurality of operators recommending a manual intervention by the operator to operate the power plant based on the collected data and the determination of the efficiency of each of the operators.

In various embodiments, collecting data pertaining to operation of the power plant includes collecting information pertaining to at least one of power production and fuel consumption or pertaining to at least one set point associated with at least one of the plurality of components. Moreover, determining an efficiency of each the plurality of operators includes may further include assigning an operator skill classification to each of the plurality of operators, determining which of the plurality of operators is the most efficient, and storing the operator skill classification of each of the plurality of operators in the memory. Further, the memory may further contain processor-executable instructions advising at least one of the plurality of operators to use a set point used by one of the plurality of operators and cause the computer device to perform the step of setting at least one set point for at least one component through the control system.

Embodiments of the present disclosure facilitate ensuring stability in transient and steady state operability of plant assets. The present disclosure describes a plant system that utilizes all possible data sources, such as Historian, maintenance and diagnostic (M&D) records, equipment repair records, power answer center (PAC) cases with an empirical algorithm that extracts features of plant operability such as startup MW, Fuel consumption, energy produced, metal temperatures, drum levels, BOP actual outputs to commanded set-points, and others. The plant system also uses a self-learning algorithm to generate an operator based skill model for various operating profiles. The plant system generates best profiles of BOP set-points based on historical data inventory, acquires real time operational features from the plant through the historian/DCS and passes this information through a corrective set-point generating algorithm that provides best set-points to the plant BOP controls system and in turn facilitates improving an overall efficiency and performance of the plant for all operating profiles. Various embodiments of the present disclosure include a method to predict best set-points for BOP to improve an efficiency and performance using high end analytics and provide operators with an operational control advisory to facilitate operating the plant in the most optimal/suboptimal/efficient and effective manner. Even a less experienced operator can also operate and control the plant in the most effective manner. Various embodiments can also provide an advisory to plant operators for determining the potential benefits of scheduled plant operations and outage/maintenance actions. In addition to an advisory role the system can also be used for an automated controls scheme. This optimal operation advisory/automated control system can be deployed in a local computer at the plant or it can be deployed at a central server, which can be accessed through a web based application.

In an instance where the system is operated as a fleet plant performance monitor, optimal profiles generated can be downloaded at any plant local computer or controls system for real time tracking purpose. Another advantage of the central system is being able to collect optimal profiles using fleet and sub fleet data.

An operator skill classification and self -learning algorithm block is used to analyze various sources of operating data from fleets and to extract different operator features, style of their operations for similar demands, dissimilar conditions, effect of their operating style on the plant performance, manual interventions used by them to meet grid demand, revenue generated due to their operating skills, loses incurred due to them and to develop predictive models to use as future advisories for operators at any site, any location, under any conditions.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processor 24, including a memory 25, such as, RAM memory, ROM memory, EPROM memory, EEPROM memory, and non-volatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect of the systems and methods described herein includes at least one of: (a) collecting data pertaining to operation of a power plant by each of a plurality of operators; (b) determining an efficiency of each of the plurality of operators in operating the power plant; and (c) advising at least one of the plurality of operators in operation of the power plant based on the collected data and the determination of the efficiency of each of the operators. Any such resulting program, having computer-readable code means, may be embodied or provided within one or more computer-readable media, thereby making a computer program product, i.e., an article of manufacture, according to the discussed embodiments of the disclosure. The computer readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

Many of the functional units described in this specification have been labeled as modules, in order to more particularly emphasize their implementation independence. For example, a module may be implemented as a hardware circuit comprising custom very large scale integration ("VLSI") circuits or gate arrays, off-the-shelf semiconductors such as logic chips, transistors, or other discrete components. A module may also be implemented in programmable hardware devices such as field programmable gate arrays (FPGAs), programmable array logic, programmable logic devices (PLDs) or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

The above-described embodiments of a method and system of operating a process plant provides a cost-effective and reliable means for adaptively learning operator skill and best practices and adjusting the process plant set-points to account for such skill as well as environmental and component variability. More specifically, the method and system described herein facilitate comparing optimal operation profiles to current set-points to make advisory recommendations or to adjust the set-points automatically. As a result, the method and system described herein facilitate operating a process plant using the skill and experience of operators captured in real-time in a cost-effective and reliable manner.

An exemplary method and system for operating a process plant are described above in detail. The apparatus illustrated is not limited to the specific embodiments described herein, but rather, components of each may be utilized independently and separately from other components described herein. Each system component can also be used in combination with other system components.

This written description uses examples to disclose embodiments of the invention, including the best mode, and also to enable any person skilled in the art to practice the embodiments, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A power plant operating system having a control system and a plurality of components controlled by the control system, the control system is used by a plurality of operators, the operating system comprising a computer device coupled to the control system, said computer device including a processor and a memory coupled to said processor, said memory containing processor-executable instructions that, when executed by said processor, cause the computer device to:
   collect data pertaining to the operation of the power plant by each of the plurality of operators; and
   transmit one or more advisory messages to at least one of the plurality of operators recommending a manual intervention by the operator to operate the power plant based on the collected data and an efficiency of each of the operators.
2. The operating system in accordance with clause 1, wherein said memory further contains processor-executable instructions that cause the computer device to determine an operating efficiency of each of the plurality of operators in operating the power plant;
3. The operating system in accordance with any preceding clause, wherein said memory further contains processor-executable instructions that cause the computer device to collect data pertaining to at least one of power production and fuel consumption.
4. The operating system in accordance with any preceding clause, wherein said memory further contains processor-executable instructions that cause the computer device to collect data pertaining to at least one set point associated with at least one of the plurality of components.
5. The operating system in accordance with any preceding clause, wherein said memory further contains processor-executable instructions that cause the computer device to:
   assign an operator skill classification to each of the plurality of operators; and
   store the operator skill classification of each of the plurality of operators in said memory.
6. The operating system in accordance with any preceding clause, wherein said memory further contains processor-executable instructions that cause the computer device to determine which of the plurality of operators is the most efficient.
7. The operating system in accordance with any preceding clause, wherein said memory further contains processor-executable instructions that cause the computer device to transmit one or more advisory messages to at least one of the plurality of operators to use a set point used by one of the plurality of operators.
8. The operating system in accordance with any preceding clause, wherein said memory further contains processor-executable instructions that, when executed by said processor, cause the computer device to set at least one set point for at least one component through the control system.
9. A computer-implemented method for operating a process facility having a control system and a plurality of components controlled by the control system, the control system is used by plurality of operators, the method is performed by a computer device coupled to the control system, the computer device including a processor and a memory coupled to the processor, the method comprising:
   collecting data pertaining to operation of the power plant by each of the plurality of operators;
   determining an efficiency of each of the plurality of operators in operating the power plant; and
   transmitting one or more advisory messages to at least one of the plurality of operators recommending a manual intervention by the operator to operate the power plant based on the collected data and the determination of the efficiency of each of the operators.
10. The computer-implemented method of any preceding clause, wherein collecting data pertaining to operation of the power plant includes collecting information pertaining to at least one of power production and fuel consumption.
11. The computer-implemented method of any preceding clause, wherein collecting data pertaining to operation of the power plant includes collecting information pertaining to at least one set point associated with at least one of the plurality of components.
12. The computer-implemented method of any preceding clause, wherein determining an efficiency of each the plurality of operators includes:
   assigning an operator skill classification to each of the plurality of operators; and
   storing the operator skill classification of each of the plurality of operators in the memory.
13. The computer-implemented method of any preceding clause, wherein determining an efficiency of each the plurality of operators includes determining which of the plurality of operators is the most efficient.
14. The computer-implemented method of any preceding clause, wherein transmitting one or more advisory messages to at least one of the plurality of operators comprises transmitting one or more advisory messages to at least one of the plurality of operators advising at least one of the plurality of operators to use a set point used by one of the plurality of operators.
15. The computer-implemented method of any preceding clause, further comprising setting at least one set point for at least one component through the control system.
16. A computer-readable storage device having processor-executable instructions stored thereon, wherein when executed by at least one processor in a computer device coupled to a control system of a power plant having a plurality of components controlled by the control system, the processor-executable instructions cause the processor to perform the steps of:
   collecting data pertaining to operation of the power plant by each of a plurality of operators;
   determining an efficiency of each of the plurality of operators in operating the power plant; and
   transmitting one or more advisory messages to at least one of the plurality of operators recommending a manual intervention by the operator to operate the power plant based on the collected data and the determination of the efficiency of each of the operators.
17. The computer-readable storage device of any preceding clause, further including processor-executable instructions such that collecting data pertaining to operation of the power plant includes collecting information pertaining to at least one of power production and fuel consumption.
18. The computer-readable storage device of any preceding clause, further including processor-executable instructions such that collecting data pertaining to operation of the power plant includes collecting information pertaining to at least one set point associated with at least one of the plurality of components.
19. The computer-readable storage device of any preceding clause, further including processor-executable instructions such that determining an efficiency of each the plurality of operators includes:
   assigning an operator skill classification to each of the plurality of operators; and
   storing the operator skill classification of each of the plurality of operators in said memory.
20. The computer-readable storage device of any preceding clause, further including processor-executable instructions such that determining an efficiency of each the plurality of operators includes determining which of the plurality of operators is the most efficient.
21. The computer-readable storage device of any preceding clause, further including processor-executable instructions such that transmitting one or more advisory messages to at least one of the plurality of operators comprises transmitting one or more advisory messages to at least one of the plurality of operators advising at least one of the plurality of operators to use a set point used by one of the plurality of operators.

## Claims

1. A method for operating a process facility having a control system (400) and a plurality of components (32, 34, 36, 38) controlled by the control system (400), wherein the control system (400) is used by plurality of operators, the method comprising:
collecting data pertaining to operation of the process facility by each of the plurality of operators; and
transmitting one or more advisory messages (428) to at least one of the plurality of operators recommending a manual intervention by the operator to operate the process facility based on the collected data and an efficiency of each of the operators.

2. The method of claim 1, further comprising:
determining an efficiency of each of the plurality of operators in operating the process facility,
wherein transmitting one or more advisory messages (428) to at least one of the plurality of operators recommending a manual intervention by the operator to operate the process facility is based on the collected data and the determination of the efficiency of each of the plurality of operators.

3. The method of claim 1 or claim 2, wherein collecting data pertaining to operation of the process facility includes collecting information pertaining to at least one set point associated with at least one of the plurality of components (32, 34, 36, 38).

4. The method of claim 1, 2 or 3, wherein determining an efficiency of each the plurality of operators includes:
assigning an operator skill classification to each of the plurality of operators; and
storing the operator skill classification of each of the plurality of operators in the memory.

5. The method of any preceding claim, wherein determining an efficiency of each the plurality of operators includes determining which of the plurality of operators is the most efficient.

6. The method of any preceding claim, wherein transmitting one or more advisory messages (428) to at least one of the plurality of operators comprises transmitting one or more advisory messages to at least one of the plurality of operators advising at least one of the plurality of operators to use a set point used by one of the plurality of operators.

7. The method of any preceding claim, further comprising setting at least one set point for at least one component (32, 34, 36, 38) through the control system (400).

8. The method of any preceding claim, wherein the process facility is a power plant.

9. The method of claim 8, wherein collecting data pertaining to operation of the power plant includes collecting information pertaining to at least one of power production and fuel consumption.

10. A computer-readable storage device having processor-executable instructions stored thereon, wherein when executed by at least one processor in a computer device coupled to a control system of a power plant having a plurality of components controlled by the control system, the processor-executable instructions cause the processor to perform the method of any preceding claim.

11. An operating system (20) having a control system (400) and a plurality of components (32, 34, 36, 38) controlled by the control system, the control system (400) is used by a plurality of operators, the operating system (20) comprising a computer device (27) coupled to the control system (400), said computer device including a processor (24) and a memory (25) coupled to said processor, said memory containing processor-executable instructions that, when executed by said processor, cause the computer device to:
collect data pertaining to the operation of a process facility by each of the plurality of operators; and
transmit one or more advisory messages (428) to at least one of the plurality of operators recommending a manual intervention by the operator to operate the process facility based on the collected data and an efficiency of each of the operators.

12. An operating system (20) comprising a computer device (27) including a processor (24) and a memory (25) coupled to said processor (24), said memory (25) containing processor-executable instructions that, when executed by said processor, cause the computer device (27) to perform the method of any one of claims 1 to 10.
